# EUROPEAN PATENT SPECIFICATION

(11) **EP 3 518 502 B1**
(45) Date of publication and mention of the grant of the patent: **07.05.2025**
(21) Application number: 18306189.4
(22) Date of filing: 11.09.2018
(51) Int. Cl.: H04L 67/02, G06F 16/955

(54) **METHODS AND SYSTEMS FOR DATA ENCODING AND DECODING**
VERFAHREN UND SYSTEME ZUR DATENCODIERUNG UND -DECODIERUNG
PROCÉDÉS ET SYSTÈMES DE CODAGE ET DE DÉCODAGE DE DONNÉES

(43) Date of publication of application: 31.07.2019
(73) Proprietor: Mobilead, 75008 Paris (FR)
(72) Inventor: TONNELIER, Laurent, 75013 Paris (FR)
(74) Representative: Atout PI Laplace

(56) References cited:
- US-A1- 2003 060 970
- US-A1- 2005 023 524
- MAYRHOFER LOCATION/PRIVACY WORKING GROUP NIC AT C SPANRING OIR-ID A: "A Uniform Resource Identifier for Geographic Locations ((OEB_ENTITY_AMPERSAND)apos;geo(OEB_ENTITY_AMPERSAND)apos; URI); draft-ietf-geopriv-geo-uri-00.txt", A UNIFORM RESOURCE IDENTIFIER FOR GEOGRAPHIC LOCATIONS ((OEB_ENTITY_AMPERSAND)APOS;GEO(OEB_ENTITY_AMPERSAND)APOS; URI); DRAFT-IETF-GEOPRIV-GEO-URI-00.TXT, INTERNET ENGINEERING TASK FORCE, IETF; STANDARDWORKINGDRAFT, INTERNET SOCIETY (ISOC) 4, RUE DES, vol. geopriv, 2 June 2009 (2009-06-02), XP015062607

## Description

### Field of the invention

The present invention relates to data encoding and decoding, in particular with regard to compact data structures.

### Background of the invention

The growth of data networks such as the internet, and the spread of cellular communications technologies such as UMTS and LTE have led to an ever increasing importance of client-server model based solutions. Vast repositories of data are available in remote databases, which can be accessed by means of a suitable index value. However, the scope of modern data platforms is such that such indices themselves have a tendency to become increasingly unwieldy.

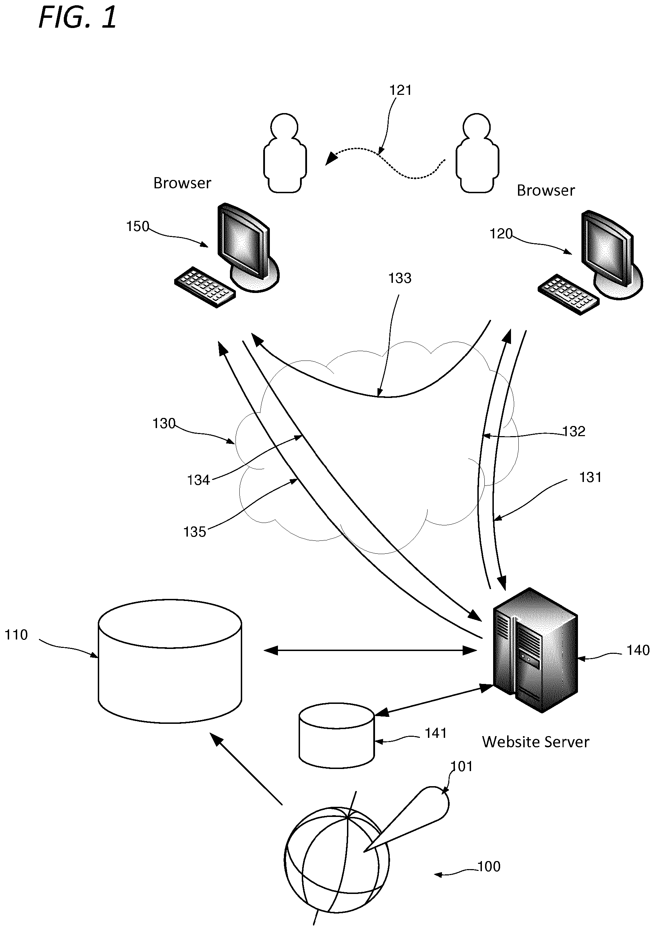

Figure 1 presents a typical use case scenario for an index of this kind.

The terrestrial globe 100 is represented digitally in a database 110. A user may use a browser 120 to interrogate this database 110 over the internet 130 via a website server 140 interfacing the database 110. As shown, the user of the browser 120 browses the representation of the globe to select a specific point 101, defined in terms of a latitude and a longitude represented by communications 131. The European Patent Office Pschorrhöfe buildings, Bayerstr. 34, 80335 Munich, Germany, are located at latitude 48.1387203, longitude 48.1387203. A URL leading to a presentation of a map centred on these offices is provided for instance by the following string:
https://www.google.com/maps/@48.1387203,11.548885939999906,17z

This basic URL comprises a domain https://www.google.com/maps/, followed by the latitude, the longitude and a zoom level.

The website server 140 may return this string via communications 132 to the user browser 120. The user of browser 120 may then forward the string to the user of another browser 150 via communication 133. The user of browser 150 may submit this string in communication 134 to the server 140, which may then retrieve the corresponding representation from the database 110 and present this to the user browser 150 via communication 135.

If instead of sharing the index via internet communication 133, the user of browser 120 wishes to share the index via some other means, such as verbal or written communication, he may be obliged to memorise the index, or parts thereof, to read it out, or to copy it onto some other medium. Although only providing only basic functionality, the URL is already sufficiently long that any of these operations is likely to be problematic.

As a partial solution to this problem, Google provide a "share" option, whereby a link to a particular view may be more conveniently transmitted. This link takes the following form: https://goo.gl/maps/Q9HKJvZmG8N2

This link in fact constitutes a token corresponding to a database entry in link database 141 containing the full URL string as presented above, e.g. https://www.google.com/maps/@48.1387203,11.548885939999906,17z. As such, the link does not contain the actual location data, and is only useable if the back-end database 141 capable of retrieving the real reference ("on-line lookup") is available. Similar approaches using an off-line look up, or a distributed database are also known in certain contexts.

US2005023524 discloses methods for encoding latitude/longitude coordinates within a URL in a relatively compact form. The method includes converting latitude and longitude coordinates from floating-point numbers to non-negative integers. A set of base-N string representations are generated for the integers (N represents the number of characters in an implementation-defined character set being utilized). The latitude string and longitude string are then concatenated to yield a single output string. The output string is utilized as a geographic indicator with a URL.

US2003060970 describes a method and system allowing two or more different coordinates for a geographic location to be expressed as a single string of characters. The single string of characters may include numerical digits or numbers, alphabetic characters or letters, punctuation or other typographical marks, other symbols, or a combination of two or more of these. A geographic location may refer to a physical place, the location of an object, or some other location.

In many contexts, these limitations may be unacceptable. According, it is desirable to provide mechanisms for encoding and decoding data in a compact manner without recourse to external databases and the like.

### Summary of the invention

The invention is defined by the appended independent claims. Further embodiments are defined by the appended dependent claims.

In accordance with the present invention in a first aspect there is provided a computer implemented method of forming a URI comprising the steps of
- receiving a one or more values, each value having a respective format corresponding to the semantic content of the value;
- converting each value into a converted value in a first common data type;
- concatenating the converted values to obtain a concatenated value;
- converting the concatenated value to an alphanumeric datatype; and
- adding a root value at the beginning of said converted concatenated value.

In a further development of the first aspect the first common data type is a binary format.

In a further development of the first aspect, at the step of converting each value into a converted value, each converted value complies with a data structure corresponding to the semantic content of the value.

In a further development of the first aspect the data structure corresponds to an amplitude of the semantic content of the value.

In a further development of the first aspect the datastructure specifies one or more padding bits at specified positions therein, whereby the total length of the data structure is equal to an integral multiple of the number of bits required to encode each alphanumeric character.

In a further development of the first aspect a value comprises a validation key component, the method comprising the further step of removing the validation key component from the value before proceeding to the step of concatenation.

In a further development of the first aspect the method comprises the further step of defining a network resource corresponding to the URI.

According to the present invention in a second aspect there is provided a computer implemented method of resolving a URI, the method comprising the steps of:
- splitting a root value from the URI on the basis of a defined data structure corresponding to the semantic content of the URI to leave a content part in alphanumeric format;
- converting the content part to a converted value in a first data type on the basis of the defined data structure;
- splitting the converted content part into one or more converted content values on the basis of a defined data structure corresponding to the semantic content of the URI; and
- converting each converted content value to a respective format corresponding to the semantic content of the respective value on the basis of the defined data structure.

In a development of the second aspect the method comprises the further step of accessing a network resource defined by the URI.

According to the present invention in a third aspect there is provided program for a computer comprising instructions adapted to implement the steps of the methods described above when executed in the computer.

According to the present invention in a fourth aspect there is provided a system for forming a URI, the system comprising:
- an interface for receiving one or more values,
- a processor adapted to convert each value into a converted value in a first common data type corresponding to the semantic content of the value,
- a processor adapted to concatenate the converted values to obtain a concatenated value,
- a processor adapted to convert the concatenated value to an alphanumeric datatype, and
- a processor adapted to adding a domain value at the beginning of said concatenated value.

According to the present invention in a fifth aspect there is provided a system for resolving a URI, the system comprising:
- an interface for receiving a URI composed of a root value and one alphanumeric value,
- a processor adapted to split the root value and said alphanumeric value on the basis of a defined data structure corresponding to the semantic content of the URI, and
- the processor further adapted to convert said alphanumeric value into a converted value in a first common data type on the basis of the defined data structure, and to convert each of said converted content values to a respective format corresponding to the semantic content of the respective value on the basis of the defined data structure.

### Brief Description of the Drawings

The above and other advantages of the present invention will now be described with reference to the accompanying drawings, in which:
Figure 1 presents a typical use case scenario for an index base URI;
Figure 2 shows steps of a method of forming a URI;
Figure 3 presents a method of resolving a URI;
Figure 4 presents a method of defining a data structure;
Figure 5 shows a system according to an embodiment; and
Figure 6 shows a system according to an embodiment.

### Detailed description

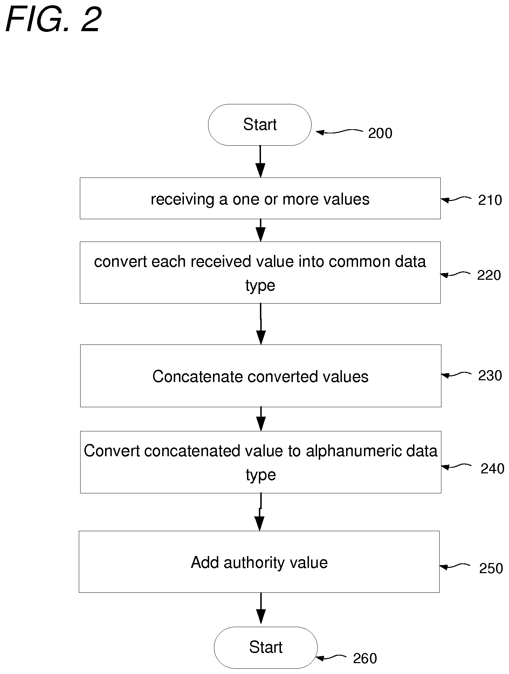

Figure 2 shows steps of a method of forming a URI. As shown in figure 2, the method starts at step 200 before proceeding to step 210 of receiving a one or more values, each value having a respective format corresponding to the semantic content of that value.

Each of these values may be viewed as a variable, relating to a particular characteristic of, for example, a product, place, person or any other entity which may be described partially or wholly in terms of such variables. The URI may be one instance of a series of such URIs, where each URI defines corresponding values, although the numbers assigned to each value in a particular instance may vary from one to the next, as they relate to different entities, or the entities to which they relate evolve over time. As such, these URIs may constitute, or reflect, a digital twin of an entity. Some example of values include identity, date, period of time, 2D coordinates, areas, 3D coordinates, volumes,2D coordinates + period of Time (RDV data), health stamp, allergens and so on. Some of these possibilities, and possible combinations thereof are explored in the following examples. Many other possibilities of values, and combinations of values, will occur to the skilled person.

In the context of a map as described above, such values might comprise one or more of a Latitude, a Longitude, a zoom level, or a time stamp for example. It will be appreciated that each of these values has a semantic content that conditions how it should be interpreted- for example, a Latitude describes the North-South position on the globe, and as such is conventionally defined as an angle between 0 and 180 degrees. While many data formats may be used to represent a Latitude value, in particular varying in terms of precision, units and the like, they will all be constrained to some extent by the inherent requirements associated with this particular semantic context. By way of example, two values may be received- a Latitude value of 48.14 degrees and a longitude value of 11.55 degrees. These may conveniently be handles as hundredths of a degree, i.e. a latitude value of 4814 and a longitude value of 1155.

On this basis, each value may have a respective format corresponding to the semantic content of the value.

The method next proceeds to step 220 at which each value is converted into a converted value in a first common data type.

This first common data type may be a binary representation, or any other convenient representation. On this basis the Latitude value of 4814 degrees may be converted to the binary value 1001011001110, and the longitude value of 1155 degrees may be converted to the binary value 10010000011

| | Latitude | Longitude |
|---|---|---|
| Base 10 value | 4814 | 1155 |
| Base 2 value | 1001011001110 | 10010000011 |

It will be appreciated that the maximum possible latitude value in the current example is 18000. Since 2¹⁴=16385, 15 bits are needed to encode all possible values. On the other hand, any value less than 16385 will require only 14 bits (or less). In order for all encoded values to have the same length in the present example, it is desirable to zero pad the value from the left so that regardless of the modulus of the value, it is encoded over 15 bits. On this basis the converted values would be 001001011001110.

Similarly, it will be appreciated that the maximum possible longitude value in the current example is 36000. Since 2¹⁵=32768, 16 bits are needed to encode all possible values. On the other hand, any value less than 32768 will require only 15 bits (or less). In order for all encoded values to have the same length in the present example, it is desirable to zero pad the value from the left so that regardless of the modulus of the value, it is encoded over 16 bits. On this basis the converted values would be 0000010010000011.

Optionally, the, or each resulting binary value may be subjected to additional compression. For example, a lossless compression algorithm such as Run Length Encoding, Huffman coding, Prediction by partial mapping, Lempel-ziv compression and so on may be used.

As such, the step of converting each value into a converted value may be performed such that the converted value complies with a data structure corresponding to the semantic content of the value. In the present example a data structure has been defined where the received values are encoded in 31bits.

Furthermore, the range of possible values (amplitude) that must be encodable for a particular received value type may be considered in defining the data structure with regard to which encoding is performed. Accordingly, the data structure may be defined to correspond to amplitude of the semantic content of the value.

| | | |
|---|---|---|
| Modulus value | 1001011001110 | 10010000011 |
| Padded value | 001001011001110 | 0000010010000011 |

It will be appreciated that depending on the nature of the original values, the addition of padding in this manner may or may not be required.

The method next proceeds to step 230 at which the converted values are concatenated to obtain a concatenated value0010010110011100000010010000011.

| | | |
|---|---|---|
| Converted values | 1001011001110 | 10010000011 |
| Concatenated value | 0010010110011100000010010000011 | |

It will be appreciated that in embodiments where only a single value is received, this step of concatenating need not be explicitly performed, since a single value is inherently concatenated with itself.

Where a plurality of values are received, the step of concatenating the converted values may be performed such that the concatenated value complies with a data structure corresponding to the semantic content of the value. In the present example a data structure has been defined where the latitude is succeeded by the longitude.

Optionally, the resulting binary value may be subjected to additional compression. For example, a lossless compression algorithm such as Run Length Encoding, Huffman coding, Prediction by partial mapping, Lempel-ziv compression and so on may be used.

The method next proceeds to step 240 at which the concatenated value is converted to an alphanumeric datatype.

The alphanumeric datatype may be any convenient alphanumeric datatype. By way of example, the following table represents the concatenated value converted to Hexadecimal format.

| | |
|---|---|
| Concatenated value | 0010010110011100000010010000011 |
| Hexadecimal | 12CE0483 |

The method next proceeds to step 250 at which a root value is added at the beginning of the concatenated value.

The root value is an authority and or the domain of the path, and or prefix, in the sense of an URI definition, as defined for example in Request for Comments (RFC) 2396, published in August 1998, and finalized in RFC 3986. In accordance with the generic URI syntax, a URI complies with the following format:
URI = scheme:[//authority]path[?query][#fragment]

| | |
|---|---|
| Concatenated value | 12CE0483 |
| URI | http://xt.ag/#/12CE0483 |

Accordingly, a root element of the URI defines the authority and/or the domain part of the path of the resource. In the following examples, the string http://xt.ag/# will be used as a generic placeholder for the root. The skilled person will appreciate that depending on implementation details any string may be used as appropriate. Where the root comprises a prefix, for example after a domain component, this may indicate additional processing steps, or be used as an indication of the semantic content of the URI, or of the identity of the datastructure used in its encoding.

On this basis, the datastructure might be defined as follows:

| root | Latitude | Longitude |
|---|---|---|
| http://xt.ag/# | 15bits | 16bits |

Depending on the format of the values as they are received, it may be necessary to apply a value level padding to ensure that each value fills the indicated number of bits.

Optionally, the resulting alphanumeric value may be subjected to additional compression. For example, a lossless compression algorithm such as Run Length Encoding, Huffman coding, Prediction by partial mapping, Lempel-ziv compression and so on may be used.

It will be appreciated that in addition to adding the root value, other elements may be added to the URL in addition to the concatenated value. For example, one or more indicator values may be added to indicate the nature of the values encoded in the URI, details of the encoding scheme or data structure used, an origin of the URI, and so on.

The method then terminates at step 260.

As discussed above, the range of possible values (amplitude) that must be encodable for a particular received value type may be considered in defining the data structure with regard to which encoding is performed. In accordance with certain embodiments, this may be performed in a further step of defining the data structure in response to the received plurality of values. As such, there may be provided a learning process, whereby a sequence of values are observed with a view to automatically assessing their amplitude.

As discussed above, the number of digits (in the case of a binary representation being used for the converted values, the digits in question will of course be bits) used in the representation of the converted values may be selected on the basis of the amplitude of the range of possible received values. This may be defined in a datastructure as described above, which may also define the manner in which converted values from respective received values should be concatenated, thereby defining the number of digits defining the concatenated value. Optionally, the datastructure may additionally specify one or more padding bits at specified positions in the data structure, so that the final concatenated value is a desired number of digits in length. By this means, the total length of the data structure may be defined for example to be equal to an integral multiple of the number of bits required to encode each alphanumeric character. Accordingly, if a base 64 representation is used, 6 bits are required to encode a single alphanumeric character. In the example presented above, the concatenated value comprised 31 bits, which is insufficient to exactly encode an integral number of alphanumeric characters. By padding the one or more of the converted values to a desired length, it can be ensured that the length of the concatenated value comprises a convenient number of bits. For example, by padding such that the concatenated value comprises 36 bits, the concatenated value can be defined to exactly convert into 6 alphanumeric characters.

Alternatively or additionally, the precision, units or granularity of each value may be selected so as to obtain values having an amplitude indicating a number of bits close to a convenient number of bits on a similar

On this basis, the datastructure might be defined as follows:

| Root | padding | Latitude | padding | Longitude |
|---|---|---|---|---|
| http://xt.ag/# | To 18bits total | 15bits | To 18bits total | 16bits |

On this basis, encoding at step 240 may be performed as follows.

| | | | | | | |
|---|---|---|---|---|---|---|
| Concatenated value | 0010010110011100000010010000011 | | | | | |
| Padded Concatenated value | 000000 | 010010 | 110011 | 100000 | 010010 | 000011 |

In the preceding example, base64 has been suggested as the basis of the generation of an alphanumeric value. Base64 is a group of similar binary-to-text encoding schemes that represent binary data in an ASCII string format by translating it into a radix-64 representation.

A conventional Base64 conversion table is set out below.

The Base64 index table:

| **Index** | | **Char** | **Index** | | **Char** | **Index** | | **Char** | **Index** | | **Char** |
|---|---|---|---|---|---|---|---|---|---|---|---|
| 000000 | 0 | A | 010000 | 16 | Q | 100000 | 32 | g | 110000 | 48 | w |
| 000001 | 1 | B | 010001 | 17 | R | 100001 | 33 | h | 110001 | 49 | x |
| 000010 | 2 | C | 010010 | 18 | S | 100010 | 34 | i | 110010 | 50 | y |
| 000011 | 3 | D | 010011 | 19 | T | 100011 | 35 | j | 110011 | 51 | z |
| 000100 | 4 | E | 010100 | 20 | U | 100100 | 36 | k | 110100 | 52 | 0 |
| 000101 | 5 | F | 010101 | 21 | V | 100101 | 37 | l | 110101 | 53 | 1 |
| 000110 | 6 | G | 010110 | 22 | W | 100110 | 38 | m | 110110 | 54 | 2 |
| 000111 | 7 | H | 010111 | 23 | X | 100111 | 39 | n | 110111 | 55 | 3 |
| 001000 | 8 | I | 011000 | 24 | Y | 101000 | 40 | o | 111000 | 56 | 4 |
| 001001 | 9 | J | 011001 | 25 | Z | 101001 | 41 | p | 111001 | 57 | 5 |
| 001010 | 10 | K | 011010 | 26 | a | 101010 | 42 | q | 111010 | 58 | 6 |
| 001011 | 11 | L | 011011 | 27 | b | 101011 | 43 | r | 111011 | 59 | 7 |
| 001100 | 12 | M | 011100 | 28 | c | 101100 | 44 | s | 111100 | 60 | 8 |
| 001101 | 13 | N | 011101 | 29 | d | 101101 | 45 | t | 111101 | 61 | 9 |
| 001110 | 14 | O | 011110 | 30 | e | 101110 | 46 | u | 111110 | 62 | + |
| 001111 | 15 | P | 011111 | 31 | f | 101111 | 47 | v | 111111 | 63 | / |

On this basis, applying the example presented above, the alphanumeric coding might be performed as follows:

| | | | | | | |
|---|---|---|---|---|---|---|
| Padded Concatenated value | 000000 | 010010 | 110011 | 100000 | 010010 | 000011 |
| Alphanumeric Value (Base64) | A | S | z | g | S | D |

While conversion of a binary value to an alphanumeric value may conveniently be achieved by this means, it may be noted that on this basis the final URI may comprise the values "+" and/or "/", corresponding to binary values 111110 or 111111. The skilled person will appreciate that these symbols may have special meanings for example in a case where the URI is resolved as a URL, which may cause errors in the interpretation or processing of the URI.

Accordingly, the alphanumeric data type may be defined to omit the characters having a special meaning in the context corresponding to the root defined in the URI. For example, in a root corresponding to a URL, the symbols "/" and "+" may be replaced.

For example, a modified table along the following lines might be adopted:
The Base64 index table:

| **Index** | | **Char** | **Index** | | **Char** | **Index** | | **Char** | **Index** | | **Char** |
|---|---|---|---|---|---|---|---|---|---|---|---|
| 000000 | 0 | A | 010000 | 16 | Q | 100000 | 32 | g | 110000 | 48 | w |
| 000001 | 1 | B | 010001 | 17 | R | 100001 | 33 | h | 110001 | 49 | x |
| 000010 | 2 | C | 010010 | 18 | S | 100010 | 34 | i | 110010 | 50 | y |
| 000011 | 3 | D | 010011 | 19 | T | 100011 | 35 | j | 110011 | 51 | z |
| 000100 | 4 | E | 010100 | 20 | U | 100100 | 36 | k | 110100 | 52 | 0 |
| 000101 | 5 | F | 010101 | 21 | V | 100101 | 37 | I | 110101 | 53 | 1 |
| 000110 | 6 | G | 010110 | 22 | W | 100110 | 38 | m | 110110 | 54 | 2 |
| 000111 | 7 | H | 010111 | 23 | X | 100111 | 39 | n | 110111 | 55 | 3 |
| 001000 | 8 | I | 011000 | 24 | Y | 101000 | 40 | o | 111000 | 56 | 4 |
| 001001 | 9 | J | 011001 | 25 | Z | 101001 | 41 | p | 111001 | 57 | 5 |
| 001010 | 10 | K | 011010 | 26 | a | 101010 | 42 | q | 111010 | 58 | 6 |
| 001011 | 11 | L | 011011 | 27 | b | 101011 | 43 | r | 111011 | 59 | 7 |
| 001100 | 12 | M | 011100 | 28 | c | 101100 | 44 | s | 111100 | 60 | 8 |
| 001101 | 13 | N | 011101 | 29 | d | 101101 | 45 | t | 111101 | 61 | 9 |
| 001110 | 14 | O | 011110 | 30 | e | 101110 | 46 | u | 111110 | 62 | - |
| 001111 | 15 | P | 011111 | 31 | f | 101111 | 47 | v | 111111 | 63 | |

As such, there is provided a modified, URL compatible, Base64 encoding scheme.

Another possibility is a Base62 conversion, for example as set out below, however it will be appreciated that while this avoids the issue of characters with a special meaning, it provides a less efficient conversion of bit values.

| **Index** | | **Char** | **Index** | | **Char** | **Index** | | **Char** | **Index** | | **Char** |
|---|---|---|---|---|---|---|---|---|---|---|---|
| 000000 | 0 | A | 010000 | 16 | Q | 100000 | 32 | g | 110000 | 48 | w |
| 000001 | 1 | B | 010001 | 17 | R | 100001 | 33 | h | 110001 | 49 | x |
| 000010 | 2 | C | 010010 | 18 | S | 100010 | 34 | i | 110010 | 50 | y |
| 000011 | 3 | D | 010011 | 19 | T | 100011 | 35 | j | 110011 | 51 | z |
| 000100 | 4 | E | 010100 | 20 | U | 100100 | 36 | k | 110100 | 52 | 0 |
| 000101 | 5 | F | 010101 | 21 | V | 100101 | 37 | I | 110101 | 53 | 1 |
| 000110 | 6 | G | 010110 | 22 | W | 100110 | 38 | m | 110110 | 54 | 2 |
| 000111 | 7 | H | 010111 | 23 | X | 100111 | 39 | n | 110111 | 55 | 3 |
| 001000 | 8 | I | 011000 | 24 | Y | 101000 | 40 | o | 111000 | 56 | 4 |
| 001001 | 9 | J | 011001 | 25 | Z | 101001 | 41 | p | 111001 | 57 | 5 |
| 001010 | 10 | K | 011010 | 26 | a | 101010 | 42 | q | 111010 | 58 | 6 |
| 001011 | 11 | L | 011011 | 27 | b | 101011 | 43 | r | 111011 | 59 | 7 |
| 001100 | 12 | M | 011100 | 28 | c | 101100 | 44 | s | 111100 | 60 | 8 |
| 001101 | 13 | N | 011101 | 29 | d | 101101 | 45 | t | 111101 | 61 | 9 |
| 001110 | 14 | O | 011110 | 30 | e | 101110 | 46 | u | | | |
| 001111 | 15 | P | 011111 | 31 | f | 101111 | 47 | v | | | |

A still further possibility is a Base256 conversion, in which a single alphanumeric character encodes an 8 bit binary value. This has the advantage of further reducing the length of the final URI, but increases the possible number of special characters which must be managed.

Any of the above encoding schemes or any of the various alternatives that may occur to the skilled person may be adopted in this regard.

In some contexts, it may be conventional for the received values to comprise a validation key component, such as a check digit. In such contexts, this redundant data is provided so that the received values may be validated.

For example, European Patent Applications take the form EP17305049.3, where the digit following the decimal point is a redundant checkdigit. By applying a mathematical algorithm to any purported European Patent Application number including such a validation value, it can be determined whether the number is valid, or not. In a case where a number is entered manually for example, this mechanism can alert a user to an input error.

In some embodiments, where a received value incorporates such a validation key component, this redundant data may be discarded before proceeding to convert the value at step 220.

In some contexts, part of a received value may comprise an offset, that is to say a value which remains the same in successive instances of a particular value. For example, if all instances of a value are based on the same root, this root may be considered as common to all identifiers in a domain, or to a particular prefix thereto, or all properties in a domain, or of a given prefix thereto. This is a concept similar to that of factorization. This might correspond to a geographical reference point, a group of codes sharing the same rood, a date expressed from a referent point in time.

In some embodiments, where a received value incorporates such an offset, this redundant data may be discarded before proceeding to convert the value at step 220.

As discussed above, the method of figure 2 may be applied to any number of received values, including a single received value. It will be appreciated that the method of figure 2 may be applied either partially or wholly in parallel with additional instances of the method of figure 2, or with other process flows.

For example, in a case where three data values are defined, corresponding to longitude, latitude, and a time stamp for instance, each of these values may be processed independently according to the method of figure 2, or some of these values may be processed independently according to the method of figure 2 and other processed by some other means

For example, the Latitude might be processed in accordance with the method of figure 2 as follows

| | Latitude |
|---|---|
| Base 10 value | 4814 |
| Base 2 value | 1001011001110 |
| Padded Base2 Value | 000001001011001110 |
| Concatenated Value | 000001001011001110 |
| Alphanumeric value | BLO |
| URI | http://xt.ag/BLO |

And the Longitude data added to the URI without other processing, e.g.
http://xt.ag/#/BLO1155

Still further, Latitude and Longitude may be processed independently in accordance with the steps of figure 2 as illustrated below:

| | Latitude | Longitude |
|---|---|---|
| Base 10 value | 4814 | 1155 |
| Base 2 value | 1001011001110 | 10010000011 |
| Padded Base2 Value | 000001001011001110 | 000000010010000011 |
| Concatenated Value | 000001001011001110 | 010010000011 |
| Alphanumeric value | BLO | AsD |

and then combined in an additional concatenation step to form the final URI as follows: http://xt.ag/#BLOAsD

It will be appreciated that many variations combining these approaches may be envisaged, and the degree of reduction of the length of the final URI achieved will depend on amplitude of the value types in question, and how closely these amplitudes correspond to the number of digits used to encode each alphanumeric character. Generally speaking, concatenating all values at step 230 before conversion to an alphanumeric form at step 240 may be expected to offer the most compact URI, but this need not always be the case.

Embodiments of the invention define a URI. Certain URI implementations, such as URLs, serve to identify a network resource. In some cases, a URI generated in accordance with the method of figure 2 may correspond to an existing network resource. In other cases, for example in the case of the scenario of figure 1, a network resource may be defined as an additional step of the process of figure 2. The definition of a network resource might comprise the generation of a database entry reference by the URI, such a map in the case of the example of figure 1. The definition of a network resource may alternatively or additionally comprise the creation of a virtual machine, network storage space or any other network resource that might be designated by a URI, as well as the population of the resource with any appropriate data.

Embodiments of the invention define a URI. Such URIs may be subject to additional encoding for certain purposes. In particular, URIs may be encoded for graphical representation. Such graphical representation may comprise representation of the URI as a one, two or three dimensional bar code, or other machine readable format. An example of a two dimensional bar code implementation is the QR code.

As a general principle, the shorter the URL, the smaller the QR Code. Similarly, where an URL or URI is stored in a memory for example in an NFC device, the memory size required will be correspondingly smaller.

While figure 2 represents a method of encoding, it will be appreciated that a corresponding method of decoding may be defined.

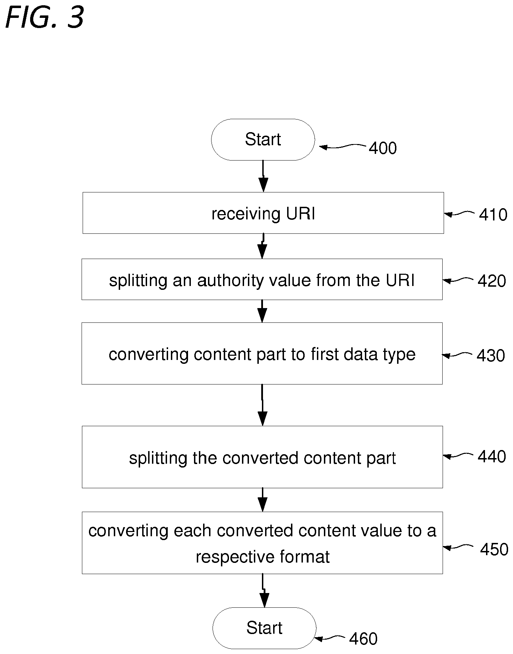

Figure 3 presents a method of resolving a URI. As shown, the method starts at step 400 before proceeding to step 410 at which a URI composed of a root value and a content part comprising one or more successive concatenated alphanumeric values is received.

The root value is split from the content part at step 420 on the basis of a defined data structure corresponding to the semantic content of the URI. Retaining the example described with respect to figure 2, the received URI may be split as follows:

| | |
|---|---|
| URI | http://xt.ag/#12CE0483 |
| Content part | 12CE0483 |

The method next proceeds to step 430 at which the alphanumeric value comprised in the content part is converted into a converted value in a first data type on the basis of the defined data structure.

The data structure may be shared between the encoding side and the decoding side, for example by means of a transmission from one to the other, or via occasional or on-demand access to a common storage resource or otherwise. Alternatively, the datastructure may be defined independently on both sides, for example on the basis of user input, machine learning, and the like as discussed above.

On this basis, for the present example the alphanumeric value may be converted as follows:

| | |
|---|---|
| Alphanumeric value | 12CE0483 |
| converted value in a first data type | 0010010110011100000010010000011 |

The method next proceeds to step 440 at which the converted value in a first data type is split on the basis of a defined data structure corresponding to the semantic content of the URI.

On this basis, for the present example the converted value may be split as follows:

| Latitude | Longitude |
|---|---|
| 15bits | 16bits |
| 01001011001110 | 0000010010000011 |

The method next proceeds to step 450 at which each converted value is further converted to a respective format corresponding to the semantic content of the respective value on the basis of the defined data structure.

On this basis, for the present example the split value may be further converted as follows:

| | | |
|---|---|---|
| Base 2 value | 1001011001110 | 10010000011 |
| Base 10 value | 4814 | 1155 |

Accordingly, the original encoded values are recovered.

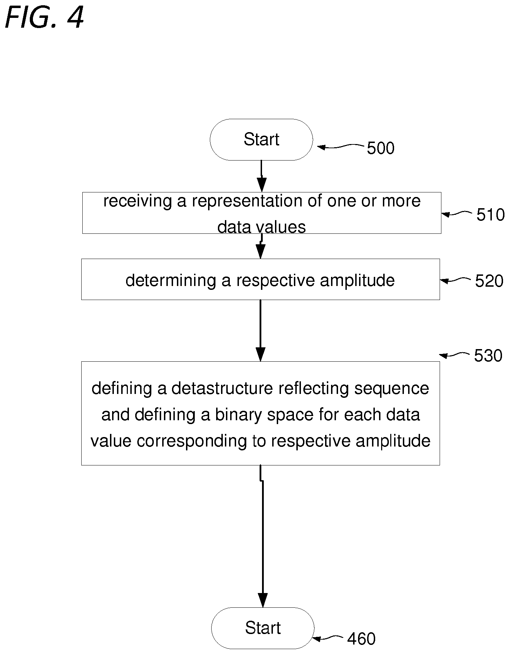

Figure 4 presents a method of defining a data structure. The data structure obtained in accordance with the steps of figure 4 may be suitable for use as datastructure mentioned with reference to figures 2 or 3 above.

As shown in figure 4, the method starts at step 500 before proceeding to step 510 at which a representation of one or more data values is received, where the datavalues have a sequence and where each represents semantic content. The method next proceeds to step 520 at which a respective amplitude of each value is determined. The amplitude of the value is the number of possible discrete forms that value might take. For example, as discussed above, a latitude value will lie between 1 and 180 degrees, so that if a 10^{th} of a degree precision is specified, there are 1800 possible values. The amplitude may be determined by calculation from criteria of this kind provided by a user or in configuration files or the like, or may be inferred through a learning process from sample values.

The method then proceeds to step 530 at which a datastructure is defined reflecting the sequence and defining a binary space for each data value corresponding to the respective amplitude. As discussed above, the binary space may correspond to the minimum number of bits capable of encoding the amplitude, or may define a large number of bits for some or all values by specifying a padding to a certain number of bits so as to support an optimal encoding using a particular alphanumeric conversion. In particular, the datastructure may specify one or more padding bits at specified positions therein, such that total length of the data structure is equal to an integral multiple of the number of bits required to encode each alphanumeric character.

As a further example, a date may be expressed in seconds since the 1 January 1970. Coding a date in seconds requires 10 digits (for example, 1535802535 corresponds to 1 September 2018 at 13 :48 : 55). 3 decimal places of precision (i.e. thousandths of a second) require 13 digits, corresponding to 41 bits.

If in a given data structure 16bits are required for a representation of Longitude and 15 bits are required for a representation of Latitude in line with the amplitude considerations presented above, the addition of 41 Bits for a time stamp brings the total size of the data structure to 72 bits. 72 is divisible by six, making Base 64 a convenient choice, by means of which the final concatenated, converted value will comprise 12 characters.

The method may comprise an optional further step of specifying a root for addition to a URI conforming to the data structure.

The foregoing examples have been presented in the context of geographic data, specifically latitude and longitude data. It will be appreciated that the present invention is not restricted to any particular data type. By way of additional illustration, a number of further implementations in other areas of activity will now be presented.

An example of an entity which may be reflected in values processed in accordance with embodiments as described above comprises trade goods. Such goods may be identified by trade item identification numbers (GTINs).

### Example 2

In a further example, values relating to trade item identification numbers (GTINs)in the Food industry on packaging will now be considered.

In the present example, three data values are used in each URI:

| | |
|---|---|
| gtin: | (global trade identifier) |
| lot: | (lot, batch number) |
| exp: | (expiration date) |

### Example 2 Encoding

For the purposes of this example, the following numbers may be received for these values respectively at step 210 as discussed above.

| | |
|---|---|
| gtin: | 3041090008221 |
| lot: | 10249737 |
| exp: | 14022017 (14th of February 2017) |

As a basis for comparison, the conventional URI representation of this data would be as follows : http://xt.ag/#/gtin/3041090008221/lot/10249737?exp=14022017

In accordance for example with the method of figure 4, a data structure for these values may be defined as follows:

| | Gtin: | Lot: | Exp: |
|---|---|---|---|
| amplitude | 0 to 999999999999 | 0 to 99999999 | 0 to 31122100 |
| Required bits | 40 | 27 | 25 |

The amplitude of the GTIN value is determined on the basis that the last digit is a validation key that may be discarded without reducing the data content of the value.

In accordance with the method of figure 2, at step 220 the values received at step 210 are converted to a common data type (in this instance, binary), as follows:
Values to be converted

| | |
|---|---|
| gtin: | 304109000822 (last digit discarded as redundant) |
| lot: | 10249737 |
| exp: | 14022017 |

To obtain the following.

| | |
|---|---|
| Gtin: | 100011011001110010011110001100001110110 (39 bits) |
| Lot: | 101111101011110000011111111 (27 bits) |
| Exp: | 110101011111010110000001 (24 bits) |

In accordance with the data structure presented above, these values are padded to arrive at the following converted values

| | |
|---|---|
| Gtin: | 0100011011001110010011110001100001110110 (padded to 40 bits) |
| Lot: | 101111101011110000011111111 (padding has no effect in this instance) |
| Exp: | 0110101011111010110000001 (padded to 25 bits) |

At step 230 these values are concatenated, as dictated by the data structure as presented above, to obtain the following concatenated value:
010001101100111001001111000110000111011000010011100011001100000100101101010111110 10110000001

At step 240 this concatenated value is converted to an alphanumeric format. By way of example, a modified Base64 encoding as presented above is used:
BGzk8YdhOMwS1fWB

Finally, at step 250 the root value http://xt.ag/#/g2 is added to obtain the final URI http://xt.ag/#g2BGzk8YdhOMwS1fWB

This may be compared once more with the conventional coding
http://xt.ag/#gtin/3041090008221/lot/10249737 ?exp=14022017

### Example 2 Decoding

For the purposes of this example, the following URI is received for these values respectively at step 410 as discussed above.
http://xt.ag/#g2BGzk8YdhOMwS1fWB

At step 420 the root value http://xt.ag/#g2 is split out to leave
BGzk8YdhOMwS1fWB.

In certain embodiments, the recognition of the root value may dictate the data structure (e.g. as presented above) to be used in the remaining steps of the resolution.

At step 430 the content part BGzk8YdhOMwS1fWB is converted from its alphanumeric format (in this case Base64) to the common format (in this case binary) to obtain the converted content part
010001101100111001001111000110000111011000010011100011001100000100101101010111110 10110000001

At step 440 this converted content part is split in accordance with the data structure (as presented above with respect to the encoding phase) to obtain the three content values:

| | |
|---|---|
| Gtin: | 0100011011001110010011110001100001110110 (40 bits) |
| Lot: | 101111101011110000011111111 (27 bits) |
| Exp: | 0110101011111010110000001 (25 bits) |

At step 450 these values are then converted to their native (in this case decimal) formats:

| | |
|---|---|
| Gtin: | 304109000822 |
| Lot: | ex 10249737 |
| Exp: | ex 14022017 |

Finally, and optionally, further processing may be performed to improve the usability of the data. For example, the validation key of the GTIN may be calculated and reinstated to give:
GTIN 3041090008221

Similarly, the date format may be converted to a more convenient format for the human user:
Exp: 14th of February 2017

### Example 3

In a further example, values relating to trade item identification numbers (GTINs) in combination with other data in the Cosmetics industry will be considered. In particular, the GTIN may be combined at the cash desk or/and at marketing content delivery with time and location data, to fight against grey market.

In the present example, four data values are used in each URI:

| | |
|---|---|
| gtin: | (global trade identifier) |
| lat: | Latitude |
| lon: | Longitude |
| tms: | Time Stamp |

### Example 3 Encoding

For the purposes of this example, the following numbers may be received for these values respectively at step 210 as discussed above.

| | | |
|---|---|---|
| gtin: | 3380810126952 | |
| lat: | 48.85 | Paris |
| lon: | 2.34 | |
| tms: | 07/09/2018 à 15:24:38.509 | |

In accordance for example with the method of figure 4, a data structure for these values may be defined as follows:

| | Gtin: | Lat | Lon: | Time stamp |
|---|---|---|---|---|
| amplitude | 0 to 999999999999 | 1 to 18000 | 1 to 36000 | 0 to 2147483647000 |
| Required bits | 40 | 15 | 16 | 41 |

The amplitude of the GTIN value is determined on the basis that the last digit is a validation key that may be discarded without reducing the data content of the value.

In accordance with the method of figure 2, at step 220 the values received at step 210 are converted to a common data type (in this instance, binary), as follows:
As a preprocessing step, the Latitude and Longitude values may be converted to integers and expressed as offsets with respect to a median value, i.e.
lat: 4885 + 18000/2 = 13885
lon: 234 + 36000/2 = 18234

Values to be converted

| | |
|---|---|
| gtin: | 338081012695 last digit discarded as redundant |
| lat: | 13885 |
| lon: | 18234 |
| tms: | 1536326678509 |

In accordance with the data structure presented above, these values are padded to arrive at the following converted values

| | |
|---|---|
| Gtin: | 0100111010110111001100101101101111010111 (padded to 40 bits) |
| Lat: | 011011000111101 (padded to 15bits |
| Lon | 0100011100111010(padded to16 bits) |
| tms: | 10110010110110100001101001011011111101101(padded to41 bits) |

At step 230 these values are concatenated, as dictated by the data structure as presented above, to obtain the following concatenated value:
010011101011011100110010110110111101011101101100011110101000111001110101011001011 0110100001101001011011111101101

At step 240 this concatenated value is converted to an alphanumeric format. By way of example, a modified Base64 encoding as presented above is used:
E63MtvXbHqOdWW0NLft
Finally, at step 250 the root value http://xt.ag/#g2 is added to obtain the final URI
http://xt.ag/#g2E63MtvXbHqOdWW0NLft

This may be compared once more with the conventional coding
http://xt.ag/#gtin/3380810126952?lat=52.37&lon=4.9&tms=2017-09-25+17_08_09.509

It will be appreciated that subsets of the original data may be processed separately as discussed above. Furthermore, in some cases it may be desirable to obtain a plurality of separate URIs encoding different subsets of the original values, for example
Subsets, 2 parts :
http://xt.ag/#clE63MtvX
(onlygtin)
http://xt.ag/#h1Szlx0V65IMml
(only geo=lat+lon, tms)
(lat+lon, tms concatenated at binary level)

### Example 4 Encoding

A Value may encode an indication of the presence of an allergen.

For example, the following are common allergens.
1. Cereals containing gluten,
2. Crustaceans and products thereof
3. Eggs and products thereof
4. Fish and products thereof
5. Peanuts and products thereof
6. Soybeans and products thereof
7. Milk and products thereof (including lactose)
8. Tree nuts and products thereof
9. Celery and products thereof
10. Mustard and products thereof
11. Sesame seeds and products thereof
12. Sulphur dioxide and sulphites
13. Lupin and products thereof
14. Molluscs and products thereof

On this basis, a structured code might take the form of a binary sequence, 00100111011010, with a 1 indicating the presence of a particular allergen, and a 0 indicating its absence in a particular foodstuff. 00100111011010may be taken as the received value in certain embodiments. This value may be converted to the common data format at step 220, where in the case the common data format is a binary format, this may mean the value is unchanged, or may nevertheless require padding as discussed above. The value may then be concatenated with other values as required (an in a case where no other data are specified in the relevant data structure, the data may once again be unchanged). The concatenated value may then be converted to an alphanumeric value, for example on the basis of the modified Base64 encoding as presented above, or otherwise, and combined with a root value.

For example, if 0100110000100011101011001100010111011011 is padded to 41 bits, the resulting Base64 representation would be "EwjrMXb"and the final URI http://xt.ag/#p2ABABh".

In a case with 14 allergens and 14 trace components, which may be represented as a 28 bit value. For example, a representation of the presence in a product of Cereals containing gluten, Fish, Mustard, traces of Eggs, might take the form:
000000001000000000001100001 (padded to 28 bits, zeros to the left)
Which converts to ABABh in Base64

Giving http://xt.aq/qtin/3270160398997/?alq=ABABh as a URI, where the GTIN is included as part of the root. The GTIN may be reduced to327016039899 with the validation key removed.

Alternatively, the GTIN may be taken as a received value to be processed in accordance with an embodiment in parallel with the processing of the allergen representation. On this basis we obtain a converted GTIN value of 0100110000100011101011001100010111011011 (padded to 41 bits, zeros to the left), giving EwjrMXb in Base 64. In accordance with this embodiment, the two resulting alphanumeric values may be concatenated together with the root to obtain the URI as follows: http://xt.ag/#EwjrMXb**ABABh** where A is required. It will be appreciated that any number of values may be compiled in a URI in this manner, of which some or all may have been processed in accordance with steps of figure 2, and others optionally may have been exposed to only some, or none of the steps of figure 2.

The densest result is obtained by concatenating both values in the common format, e.g. binary. In other words, both the GTIN and the allergen representation are processed together as received values in the method of figure 2. On this basis, the data structure defines a total of 41+28 = 69 Bits which in Base 64 encodes 12 characters. Accordingly, in accordance with an embodiment we obtain http://xt.ag/#AAJhHWYu3ABhwhere AA is optional.

A network resource might then be defined so as to be accessible with this URI which might provide a human readable description of the allergens in question, and any other guidance or advice that may be appropriate.

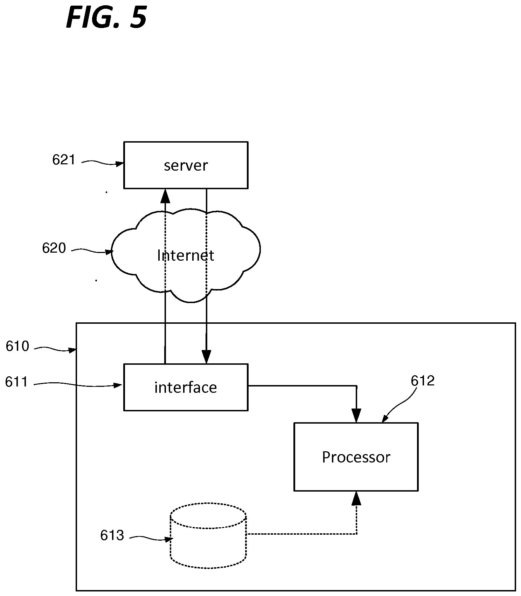

Figure 5 shows a system according to an embodiment. As shown, there is provided asystem 600for forming a URI. As shown, the system comprises an interface 611 for receiving a one or more of values, e.g. from server 621 via the internet 621, and a processor 612 adapted to convert each value into a converted value in a first common data type. The processor 612 is further adapted to concatenate the converted values to obtain a concatenated value to convert the concatenated value to an alphanumeric datatype, and a processor adapted to adding a root value at the beginning of the concatenated value.

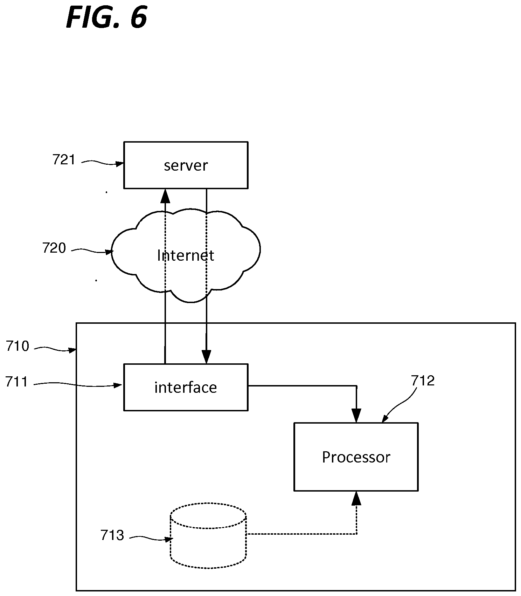

As shown, the system comprises an optional data storage 613 containing a data structure corresponding to the semantic content of the value. In accordance with certain embodiments as described above, the sequence in which converted values are concatenated, the number of bits to which each value must be padded, and other necessary information is provided in this data structure. Figure 6 shows a system according to an embodiment. As shown, there is provided asystem 700 for resolving a URI. As shown, the system comprises an interface 611 for receiving an root value and one or more successive concatenated alphanumeric values, e.g. from server 721 via the internet 721, and a processor 712 to split the root value and each concatenated value on the basis of a defined data structure corresponding to the semantic content of the URI, to convert each alphanumeric value into a converted value in a first common data type on the basis the defined data structure, and to convert each converted value to a respective format corresponding to the semantic content of the value on the basis of the defined data structure.

As shown, the system comprises an optional data storage 713 containing the data structure.

The preceding embodiments relate to the generation of a complete URI, but it will be appreciated that in some cases it may be desirable not to proceed as far as the step of adding the root or authority value.

On this basis, there may be provided a method of forming a data string, which may constitute the hierarchical part of a URI, comprising the steps of:
receiving a one or more values, each said value having a respective format corresponding to the semantic content of said value,
converting each said value into a converted value in a first common data type,
concatenating said converted values to obtain a concatenated value, and
converting said concatenated value to an alphanumeric datatype.

Each said value may have a respective format corresponding to the semantic content of said value. The first common data type may be a binary format. At the step of converting each value into a converted value, each converted value may comply with a data structure corresponding to the semantic content of the value. The data structure may correspond to an amplitude of the semantic content of the value.

The datastructure may specify one or more padding bits at specified positions, whereby the total length of the data structure is equal to an integral multiple of the number of bits required to encode each said alphanumeric character.

URIs such as URLs often contain data, which may be found in, or otherwise be relevant to the resource to which the URL relates. In order to provide the same information in a compact URI, the individual data components are converted to a common format such as a binary format, concatenated and the resulting value converted to an alphanumeric format, for example using a base64 encoding. These steps may be performed on the basis of a datastructure defining the concatenation sequence and the dataspace to be filled by each value after conversion to the common format. Corresponding methods for decoding URIs and compiling a datastructure are disclosed.

It will be appreciated that the system of figure 5 or 6 or any equivalent functional grouping may further be adapted to implement the functions corresponding to any combination of the method steps described above with reference to any of figures 1 to 4.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

These methods and processes may be implemented by means of computer-application programs or services, an application-programming interface (API), a library, and/or other computer-program product, or any combination of such entities.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A computer implemented method of forming a URI, said method comprising the steps of
receiving (210) one or more values, each said value having a respective format corresponding to the semantic content of said value,
converting (220) each said value into a converted value in a first common data type,
concatenating (230) said converted values to obtain a concatenated value,
converting (240) said concatenated value to an alphanumeric datatype, and
adding (250) a root value at the beginning of said converted concatenated value.

2. The method of claim 1 wherein said first common data type is a binary format.

3. The method of any preceding claim wherein at said step of converting (240) each said value into a converted value, each said converted value complies with a data structure corresponding to the semantic content of said value.

4. The method of claim 3 wherein said data structure corresponds to an amplitude of said semantic content of said value.

5. The method of claim 3 or 4 wherein said data structure specifies one or more padding bits at specified positions therein, whereby the total length of said data structure is equal to an integral multiple of the number of bits required to encode each said alphanumeric character.

6. The method of any preceding claim wherein a said value comprises a validation key component, said method comprising the further step of removing said key component from said value before proceeding to said step of concatenation.

7. The method of any preceding claim comprising the further step of defining a network resource corresponding to said URI.

8. A computer implemented method of resolving a URI, said method comprising the steps of
splitting (420) a root value from the URI on the basis of a defined data structure corresponding to the semantic content of the URI to leave a content part in alphanumeric format,
converting (430) the content part to a converted value in a first data type on the basis of said defined data structure,
splitting (440) the converted content part into one or more converted content values on the basis of a defined data structure corresponding to the semantic content of the URI, and
converting (450) each converted content value to a respective format corresponding to the semantic content of the respective value on the basis of the defined data structure.

9. The method of claim 8 comprising the further step of accessing a network resource defined by said URI.

10. A program for a computer comprising instructions adapted to implement the steps of any preceding claim when executed on a computer.

11. A system for forming a URI, said system comprising
an interface (611) for receiving one or more values,
a processor (612) adapted to convert each said value into a converted value in a first common data type corresponding to the semantic content of said value,
a processor adapted to concatenate said converted values to obtain a concatenated value,
a processor adapted to convert said concatenated value to an alphanumeric datatype, and
a processor adapted to adding a root value at the beginning of said converted concatenated value.

12. A system for resolving a URI, said system comprising
an interface (711) for receiving a URI composed of a root value and one concatenated alphanumeric value,
a processor (612) adapted to split said root value and said alphanumeric value on the basis of a defined data structure corresponding to the semantic content of said URI,
the processor further adapted to convert said alphanumeric value into a converted value in a first common data type on the basis of said defined data structure, to split the converted value into one or more converted content values and to convert each of said converted content values to a respective format corresponding to the semantic content of the respective value on the basis of said defined data structure.

## Patentansprüche

1. Computerimplementiertes Verfahren zum Bilden eines URI, wobei das Verfahren die folgenden Schritte umfasst:
Empfangen (210) von einem oder mehreren Werten, wobei jeder Wert ein jeweiliges Format aufweist, das dem semantischen Inhalt des Werts entspricht,
Konvertieren (220) jedes Werts in einen konvertierten Wert in einem ersten gemeinsamen Datentyp,
Verketten (230) der konvertierten Werte, um einen verketteten Wert zu erlangen,
Konvertieren (240) des verketteten Werts in einen alphanumerischen Datentyp, und
Hinzufügen (250) eines Root-Werts am Anfang des konvertierten verketteten Werts.

2. Verfahren nach Anspruch 1, wobei der erste gemeinsame Datentyp ein Binärformat ist.

3. Verfahren nach einem der vorhergehenden Ansprüche, wobei beim Schritt des Konvertierens (240) jedes Werts in einen konvertierten Wert sich jeder konvertierte Wert nach einer Datenstruktur richtet, die dem semantischen Inhalt des Werts entspricht.

4. Verfahren nach Anspruch 3, wobei die Datenstruktur einer Amplitude des semantischen Inhalts des Werts entspricht.

5. Verfahren nach Anspruch 3 oder 4, wobei die Datenstruktur ein oder mehrere Füllbits an festgelegten Positionen darin festlegt, wodurch die Gesamtlänge der Datenstruktur gleich einem ganzzahligen Vielfachen der Anzahl von Bits ist, die erforderlich ist, um jedes alphanumerische Zeichen zu codieren.

6. Verfahren nach einem der vorhergehenden Ansprüche, wobei ein Wert eine Validierungsschlüsselkomponente umfasst, wobei das Verfahren den weiteren Schritt des Entfernens der Schlüsselkomponente aus dem Wert umfasst, bevor mit dem Schritt der Verkettung fortgefahren wird.

7. Verfahren nach einem der vorhergehenden Ansprüche, umfassend den weiteren Schritt des Definierens einer Netzwerkressource, die dem URI entspricht.

8. Computerimplementiertes Verfahren zum Auflösen eines URI, wobei das Verfahren die folgenden Schritte umfasst:
Abtrennen (420) eines Root-Werts von dem URI auf der Grundlage einer definierten Datenstruktur, die dem semantischen Inhalt des URI entspricht, um einen Inhaltsteil in alphanumerischem Format zu belassen,
Konvertieren (430) des Inhaltsteils in einen konvertierten Wert in einem ersten Datentyp auf der Grundlage der definierten Datenstruktur,
Trennen (440) des konvertierten Inhaltsteils in einen oder mehrere konvertierte Inhaltswerte, auf der Grundlage einer definierten Datenstruktur, die dem semantischen Inhalt des URI entspricht, und
Konvertieren (450) jedes konvertierten Inhaltswerts auf der Grundlage der definierten Datenstruktur in ein jeweiliges Format, das dem semantischen Inhalt des jeweiligen Werts entspricht.

9. Verfahren nach Anspruch 8, umfassend den weiteren Schritt des Zugreifens auf eine Netzwerkressource, die durch den URI definiert ist.

10. Programm für einen Computer, Anweisungen umfassend, die dafür angepasst sind, die Schritte nach einem der vorhergehenden Ansprüche auszuführen, wenn sie auf einem Computer ausgeführt werden.

11. System zum Bilden eines URI, wobei das System Folgendes umfasst:
eine Schnittstelle (611) zum Empfangen von einem oder mehreren Werten,
einen Prozessor (612), der dafür angepasst ist, jeden Wert in einen konvertierten Wert in einem ersten gemeinsamen Datentyp, der dem semantischen Inhalt des Werts entspricht, zu konvertieren,
einen Prozessor, der dafür angepasst ist, die konvertierten Werte zu verketten, um einen verketteten Wert zu erlangen,
einen Prozessor, der dafür angepasst ist, den verketteten Wert in einen alphanumerischen Datentyp zu konvertieren, und
einen Prozessor, der dafür angepasst ist, am Anfang des konvertierten verketteten Werts einen Root-Wert hinzuzufügen.

12. System zum Auflösen eines URI, wobei das System Folgendes umfasst:
eine Schnittstelle (711) zum Empfangen eines URI, der aus einem Root-Wert und einem verketteten alphanumerischen Wert zusammengesetzt ist,
einen Prozessor (612), der dafür angepasst ist, auf der Grundlage einer definierten Datenstruktur, die dem semantischen Inhalt des URI entspricht, den Root-Wert und den alphanumerischen Wert abzutrennen,
wobei der Prozessor ferner dafür angepasst ist, den alphanumerischen Wert auf der Grundlage der definierten Datenstruktur in einen konvertierten Wert in einem ersten gemeinsamen Datentyp zu konvertieren, den konvertierten Wert in einen oder mehrere konvertierte Inhaltswerte zu trennen und jeden der konvertierten Inhaltswerte auf der Grundlage der definierten Datenstruktur in ein jeweiliges Format zu konvertieren, das dem semantischen Inhalt des jeweiligen Werts entspricht.

## Revendications

1. Procédé mis en œuvre par ordinateur de formation d'un URI, ledit procédé comprenant les étapes de :
réception (210) d'une ou de plusieurs valeurs, chaque dite valeur présentant un format respectif correspondant au contenu sémantique de ladite valeur,
conversion (220) de chaque dite valeur en une valeur convertie dans un premier type de données commun,
concaténation (230) desdites valeurs converties pour obtenir une valeur concaténée,
conversion (240) de ladite valeur concaténée en un type de données alphanumérique, et
ajout (250) d'une valeur de racine au début de ladite valeur concaténée convertie.

2. Procédé selon la revendication 1, dans lequel ledit premier type de données commun est un format binaire.

3. Procédé selon l'une quelconque des revendications précédentes, dans lequel, au niveau de ladite étape de conversion (240) de chaque dite valeur en une valeur convertie, chaque dite valeur convertie est conforme à une structure de données correspondant au contenu sémantique de ladite valeur.

4. Procédé selon la revendication 3, dans lequel ladite structure de données correspond à une amplitude dudit contenu sémantique de ladite valeur.

5. Procédé selon la revendication 3 ou 4, dans lequel ladite structure de données spécifie un ou plusieurs bits de bourrage au niveau de positions spécifiées en son sein, moyennant quoi la longueur totale de ladite structure de données est égale à un multiple entier du nombre de bits requis pour coder chaque dit caractère alphanumérique.

6. Procédé selon l'une quelconque des revendications précédentes, dans lequel une dite valeur comprend une composante de clé de validation, ledit procédé comprenant l'étape supplémentaire de suppression de ladite composante de clé de ladite valeur avant de procéder à ladite étape de concaténation.

7. Procédé selon l'une quelconque des revendications précédentes, comprenant l'étape supplémentaire de définition d'une ressource de réseau correspondant audit URI.

8. Procédé mis en œuvre par ordinateur de résolution d'un URI, ledit procédé comprenant les étapes de :
séparation (420) d'une valeur de racine de l'URI sur la base d'une structure de données définie correspondant au contenu sémantique de l'URI pour laisser une partie de contenu en format alphanumérique,
conversion (430) de la partie de contenu en une valeur convertie dans un premier type de données sur la base de ladite structure de données définie,
séparation (440) de la partie de contenu convertie en une ou plusieurs valeurs de contenu converties sur la base d'une structure de données définie correspondant au contenu sémantique de l'URI, et
conversion (450) de chaque valeur de contenu convertie en un format respectif correspondant au contenu sémantique de la valeur respective sur la base de la structure de données définie.

9. Procédé selon la revendication 8, comprenant l'étape supplémentaire d'accès à une ressource de réseau définie par ledit URI.

10. Programme pour un ordinateur, comprenant des instructions adaptées pour mettre en œuvre les étapes selon l'une quelconque des revendications précédentes lorsqu'elles sont exécutées sur un ordinateur.

11. Système pour former un URI, ledit système comprenant :
une interface (611) pour recevoir une ou plusieurs valeurs,
un processeur (612) adapté pour convertir chaque dite valeur en une valeur convertie dans un premier type de données commun correspondant au contenu sémantique de ladite valeur,
un processeur adapté pour concaténer lesdites valeurs converties pour obtenir une valeur concaténée,
un processeur adapté pour convertir ladite valeur concaténée en un type de données alphanumérique, et
un processeur adapté pour ajouter une valeur de racine au début de ladite valeur concaténée convertie.

12. Système pour résoudre un URI, ledit système comprenant :
une interface (711) pour recevoir un URI composé d'une valeur de racine et d'une valeur alphanumérique concaténée,
un processeur (612) adapté pour séparer ladite valeur de racine et ladite valeur alphanumérique sur la base d'une structure de données définie correspondant au contenu sémantique dudit URI,
le processeur étant en outre adapté pour convertir ladite valeur alphanumérique en une valeur convertie dans un premier type de données commun sur la base de ladite structure de données définie, pour séparer la valeur convertie en une ou plusieurs valeurs de contenu converties et pour convertir chacune desdites valeurs de contenu converties en un format respectif correspondant au contenu sémantique de la valeur respective sur la base de ladite structure de données définie.
